Europäisches Patentamt

European Patent Office

Office européen des brevets

(19)

(11) EP 1 128 156 A1

(12) EUROPEAN PATENT APPLICATION

(43) Date of publication:
29.08.2001 Bulletin 2001/35

(51) Int Cl.⁷: $G01B\ 5/00$, B23Q 11/00

(21) Application number: 01301059.0

(22) Date of filing: 07.02.2001

(84) Designated Contracting States:
AT BE CH CY DE DK ES FI FR GB GR IE IT LI LU
MC NL PT SE TR
Designated Extension States:
AL LT LV MK RO SI

(30) Priority: 10.02.2000 US 501615

(71) Applicant: GENERAL ELECTRIC COMPANY
Schenectady, NY 12345 (US)

(72) Inventors:
• Hemmerle, R. David
Blue Ash, Ohio 45242 (US)

• Sproka, Gary Edward
Loveland, Ohio 45140 (US)
• Hoehn, Jon M.
Wilmington, North Carolina 28411 (US)

(74) Representative: Goode, Ian Roy
GE LONDON PATENT OPERATION,
Essex House,
12/13 Essex Street
London WC2R 3AA (GB)

(54) **Method and apparatus for automatically compensating for measurement error**

(57)     Thermally induced measurement error compensation is provided in a machine tool (10) including a probe (50) for measuring a work piece (26) and temperature sensors (42,44) for measuring the temperature of the work piece (26) and the machine tool (10). The compensation is accomplished by first using the probe (50) to measure an observed dimension of the work piece (26). The machine tool's processor (46) uses the measured temperatures to determine the thermal expansion of the machine tool (10) and the work piece (26). Then, the processor (46) determines the actual dimension at the standard reference temperature of the work piece (26) from the observed dimension, the machine tool thermal expansion, and the work piece thermal expansion.

FIG. 1

EP 1 128 156 A1

## Description

This invention relates generally to CNC machine tools and more particularly to automated compensation of thermally induced measurement error in such machines.

A wide variety of machine tools are available to machine and produce parts in an efficient and repeatable manner. In machining such parts, it is often necessary to measure certain machined dimensions to assure the accuracy of the part's dimensions. Traditionally, work piece dimensions have been measured using manual gauges. These gauges are manually employed by the machine operator and are positioned by feel and/or by observation of an indicator to establish proper positioning. However, these manual operations are time consuming, use costly gauges and are dependent on the individual operator's skill level. This serves to limit the capacity of the machine tool and drives up the cost of producing the parts. Furthermore, all such manual operations are prone to introducing errors into the machining process.

To avoid these drawbacks, improved approaches to machine gauging have been sought. One such approach is known as "on machine probing." On machine probing employs a sensor, such as a touch trigger type displacement probe, to probe machined surfaces of the work piece. The probe is mounted into the machine tool's tool holding structure and uses its axis and positioning feedback system to determine various work piece dimensions. However, measurement inaccuracies can occur with on machine probing due to variations in the thermal expansion of the machine tool and the workpiece.

Generally, all solid materials expand and contract as the temperature increases and decreases, respectively. The amount of expansion or contraction is determined by the material's coefficient of expansion. Thus, a dimension is ordinarily described in terms of a standard reference temperature such as 68 °F (20 °C). For instance, 10.000 centimeters on a drawing would mean the dimension is to measure 10.000 centimeters when the object is observed at 68 °F (20 °C). If the object is observed at 70 °F (21 °C), then the dimension would be slightly greater than 10.000 centimeters, depending on the object's coefficient of thermal expansion. Similarly, when a machine tool is commanded to move 10.000 centimeters, it will move a distance that is equal to 10.000 centimeters when observed at the standard temperature of 68 °F (20 °C).

Quite often, a machine tool and the work piece that is being machined on the machine tool will have different coefficients of expansion. This is particularly the case when considering that machine tools are typically made of a number of diverse materials (e.g., aluminum, glass, plastic, etc.). The dissimilar coefficients of expansion will result in measuring inaccuracies if either one of the work piece and the machine tool is not at the standard temperature. Measuring inaccuracies will also occur when the work piece and the machine tool are at the same temperature if that temperature is not the standard temperature. In the rare event that the work piece and machine tool have the same coefficient of expansion, measuring inaccuracies will occur when the two are at different temperatures. This is often the case because the machining operation tends to increase the temperature of the work piece more than the machine tool temperature. Such measurement inaccuracies or errors can lead to parts that are out-of-tolerance and/or have invalid documentation.

Various approaches are used in traditional work piece measurement operations to account for these thermally induced measurement errors. One such approach is to have the gauge made of a material having the same coefficient of expansion as the work piece and maintain it at the same temperature as the work piece. Another approach is to employ a master that is made of a material having the same coefficient of expansion as the work piece. The master is maintained at the same temperature as the work piece, and the gauge is referenced to the master just prior to work piece measurement. A third approach is to maintain both the work piece and the measuring equipment at the standard reference temperature. However, these methods can complicate the measurement process and add significant cost to the machining operation. More importantly, these methods are generally not applicable to on machine probing in which the traditional gauging methodology is replaced with the machine-mounted probe.

Thus, with the change to on machine probing for work piece measurement, accounting for different coefficients of expansion presents new challenges. In machine shops that machine materials with coefficients of expansion similar to the machine tool coefficients and/or produce parts having large tolerances, the thermally induced measurement error is commonly ignored. But shops with high accuracy demands are often prevented from taking advantage of on machine probing due to an inability to correct thermally induced measurement error.

Accordingly, there is a need for a method of automatically compensating for thermally induced measurement errors and a machine tool capable of performing such a method.

The above-mentioned need is met by the present invention which provides a machine tool including a probe for measuring a work piece and temperature sensors for measuring the temperature of the work piece and the machine tool. Measurement error is compensated by first using the probe to measure an observed dimension of the work piece. The machine tool's processor is used to determine the thermal expansion of the machine tool and the work piece. Then, the processor determines an actual dimension of the work piece from the observed dimension, the machine tool thermal expansion, and the work piece thermal expansion.

An embodiment of the invention will now be described, by way of example, with reference to the accompanying drawings, in which:

Figure 1 is a perspective view of a CNC machine tool.

Figure 2 is a top view of the work table of the machine tool of Figure 1 showing a work piece measurement.

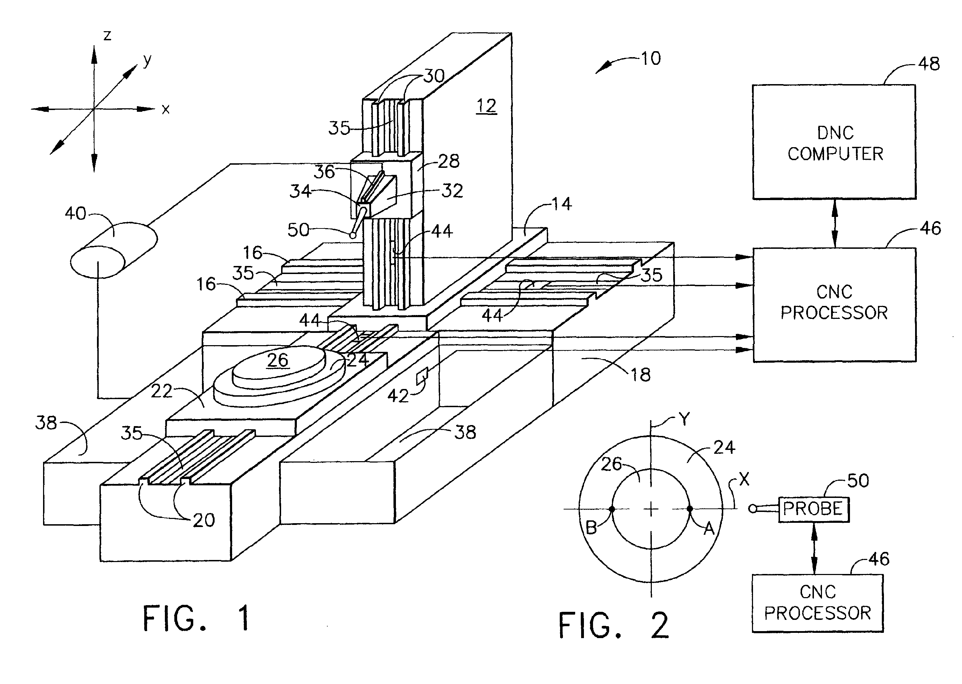

Referring to the drawings wherein identical reference numerals denote the same elements throughout the various views, Figure 1 shows a multi-axis, computer numerically controlled (CNC) machine tool 10. The machine tool 10 operates on a coordinate axis system having an X-axis and an Y-axis oriented horizontally and a Z-axis oriented vertically. It should be noted that the machine tool described herein is used merely as an example to facilitate disclosure of the present invention, and the present invention is thus not limited to this particular type of CNC machine tool. Indeed, the present invention is applicable to a wide variety of machine tools.

The CNC machine tool 10 includes a vertical column 12 mounted on a linearly movable platform 14. The platform 14 is slideably supported on horizontal X-direction guide rails 16 that are rigidly connected to a machine base 18, parallel to the X-axis. The machine base 18 also has horizontal Y-direction guide rails 20 rigidly connected thereto and extending perpendicular to the X-direction guide rails 16. A work table carrier 22 is slideably supported on the Y-direction guide rails 20. A rotary work table 24 is rotatively mounted on the work table carrier 22 for rotation about an axis of rotation, which is parallel to the Z-axis. The rotary work table 24 supports for a work piece 26 to be machined.

A spindle carrier 28 is slideably supported on vertical Z-direction guide rails 30 that are rigidly connected to the column 12, parallel to the Z-axis. Thus, the spindle carrier 28 can be moved vertically, along the Z-axis, towards or away from the work piece 26 clamped to the rotary work table 24. The spindle carrier 28 supports a spindle mechanism 32 that includes a tool holder 34 capable of receiving various cutting tools, measuring devices and probes used in the machining process.

The tool holder 34 can thus be moved along the X-, Y- and Z-axes so as to be accurately positioned with respect to the work piece 26. The machine tool 10 includes a conventional measuring system for tracking the relative position of the tool holder 34. The measuring system can comprise a linear scale 35 for each coordinate axis as shown in Figure 1. Alternatively, a plurality of rotary encoders could be used instead of linear scales.

The machine tool 10 includes a conventional system for cooling the work piece 26 and removing debris during machining operations. In one preferred embodiment, a nozzle 36 is incorporated into the spindle mechanism 32 and arranged to spray a stream of coolant onto the work piece 26 at a flow rate of many gallons per minute. The coolant is collected in a sump 38, and a pump 40 is provided for circulating the coolant, as is shown schematically in Figure 1.

The machine tool 10 also includes a means for measuring the work piece temperature. In the illustrated embodiment, this means comprises a temperature sensor 42 situated to sense the temperature of the coolant as it flows into the sump 38. Because of the coolant's high thermal transmitting capability, the coolant and the work piece 26 will assume substantially the same temperature after only a short period of work piece flooding. Thus, by placing the temperature sensor 42 in the coolant flow just downstream of the work piece 26, it will effectively provide an indication of the work piece temperature. It should be understood that other approaches to measuring the work piece temperature are also applicable.

Additional temperature sensors 44 are provided for monitoring the temperature of the machine tool 10, particularly the measuring system that tracks the positioning of the tool holder 34. Thus, each one of the three linear scales 35 has at least one of the machine temperature sensors 44 attached thereto.

Control of the CNC machine 10 is provided by a CNC processor 46 generally, but not necessarily, mounted near or in the vicinity of the column 12. The CNC processor 46 is capable of being programmed to machine a work piece as well as making necessary work piece measurements. The CNC processor 46 also has computer calculating capability. Programs are loaded in a conventional manner using CNC programs via a host digital numerical control (DNC) computer 48. These programs, typically referred to as NC programs, provide data for controlling the operation of the machine tool 10. The CNC processor 46 also receives input from each of the temperature sensors 42 and 44.

During machining, an appropriate tool (not shown in Figure 1) is inserted into the tool holder 34, and the work piece 26 is clamped onto the rotary work table 24. The CNC processor 46 controls the movement of the platform 14, the work table carrier 22, the rotary work table 24 and the spindle carrier 28 to position the tool relative to the work piece 26 so that the machining operation can be performed. At some point in the operation, it may become necessary to measure a dimension of the work piece 26. To do this, the tool is removed and a sensing probe 50 is inserted in the tool holder 34. One type of probe that is suitable for use as the probe 50 is a conventional touch trigger type of displacement probe, although other types of probes could be used as well.

Figure 2 schematically shows how an X-direction dimension of the work piece 26 is measured. The probe 50 is moved along the X-axis until it contacts the work piece 26 at a point A on a first side thereof. The contact of the probe 50 against the work piece 26 triggers the probe 50 to send a signal to the CNC processor 46, and the X-axis position of point A is stored in the CNC processor 46. The probe 50 is then moved into contact with the opposite side of the work piece 26 at a point B on the X-axis. The X-axis position of point B is also stored in the CNC processor 46. The CNC processor 46 then uses the two stored position values to determine the observed dimension (i.e., the distance between points A and B) of the work piece 26. In this case, the observed dimension is the diameter of the cylindrical work piece 26, although the same measuring process would apply to other dimensions and differently shaped work pieces. Furthermore, the same process could be applied to measuring dimensions in the Y- or Z-directions.

There are many conditions under which the observed dimension will not be accurate. As described above, measurement error will occur if the machine tool 10 and the work piece 26 are at different temperatures because the respective thermal expansion will be different. Measurement error will also occur if the machine tool 10 and the work piece 26 have different coefficients of expansion and the work piece 26, the machine tool 10 or both are not at the standard reference temperature (typically 68 °F (20 °C)). The present invention provides for automatic compensation of such measurement errors by accounting for the difference between the machine tool's thermal expansion and the work piece's thermal expansion.

The first step of the compensation process is to determine the amount of work piece thermal expansion from the size that the work piece 26 would be at the standard reference temperature. To this end, the work piece's coefficient of thermal expansion is included in the NC program and is thus stored in the CNC processor 46. Thus, the work piece's thermal expansion, $E_w$, is determined with the equation:

$$E_w = \alpha_w \, \Delta T_w \, d_o$$

where $\alpha_w$ is the work piece's coefficient of thermal expansion, $\Delta T_w$ is the difference between the work piece temperature measured by the work piece temperature sensor 42 and the standard temperature, and $d_o$ is the observed dimension of the work piece 26 measured by the probe 50.

The next step is to determine the amount of thermal expansion of the machine tool 10 along the X-axis from the standard reference temperature. The machine tool's thermal expansion, $E_m$, is determined with the equation:

$$E_m = \alpha_m \, \Delta T_m \, d_o$$

where $\alpha_m$ is the machine tool's coefficient of thermal expansion and $\Delta T_m$ is the difference between the machine tool temperature measured by the X-axis temperature sensor 44 and the standard temperature. The machine tool's coefficient of thermal expansion is also included in the NC program and stored in the CNC processor 46.

This can be an effective coefficient of expansion for the machine tool 10 that is typically stated by the original equipment manufacturer or else established empirically by the end user. In some machine tools, different rates of expansion are experienced along the three coordinate axes. Thus, as an alternative to inputting a single effective coefficient of thermal expansion for the machine tool 10, a separate coefficient of thermal expansion for each coordinate axis could be established empirically and stored in the CNC processor 42. In this case, $E_m$ in the above equation would be the coefficient of thermal expansion for the X-axis because the dimension being measured extends in the X-direction. If a dimension extending in another direction were being measured, then the coefficient of thermal expansion for that axis would be used.

The difference of the two thermal expansions ($E_w$ - $E_m$) represents the thermally induced error or distortion. Once the thermal expansions of the work piece 26 and the machine tool 10 are known, the actual dimension, $d_a$, can be determined as follows:

$$d_a = d_o - (E_w - E_m)$$

Accordingly, the actual dimension of the work piece 26 can be determined from the observed dimension as measured by the probe 50 and the calculated thermal expansions. By programming the CNC processor 46 to make this calculation, the machine tool 10 can automatically compensate for measuring error encountered from on machine probing when measuring work pieces having different coefficients of thermal expansion and/or at non-standard temperature. The CNC processor 46 is capable of automatic compensation for thermally induced measurement error. The automatic measurement error compensation of the present invention optimizes measuring accuracy by establishing the work piece's standard temperature size.

It should be noted that although the above discussion focussed on automatically compensating measurement error for an X-direction dimension, the same process would be applicable to Y- and Z-direction dimensions as well. Furthermore, the present invention will also apply to dimensions extending in more than one direction by simply determining the observed dimension in each direction and then applying the above equations for each of the observed dimensions. For example, if point A as detected by the probe 50 had the coordinates $x_1$, $y_1$ and $z_1$ and point B had the coordinates $x_2$, $y_2$ and $z_2$, the observed dimension in the X-direction would by $x_2$-$x_1$, the observed dimension in the Y-direction would be $y_2$-$y_1$, and the observed dimension in the Z-direction would be $z_2$-$z_1$. The above equations would be used for the observed dimension for each direction to determine the actual dimension in each direction. These values would then be combined to determine the overall actual dimension.

## Claims

1. A method of compensating for measurement error in a machine tool (10) including a probe (50) for measuring a work piece (26), the method comprising the steps of:

    using said probe (50) to measure an observed dimension of said work piece (26);
    determining the thermal expansion of said machine tool (10);
    determining the thermal expansion of said work piece (26); and
    determining an actual dimension of said work piece (26) from said observed dimension, said machine tool thermal expansion, and said work piece thermal expansion.

2. A method of compensating for measurement error in a computer numerically controlled machine tool (10) including X, Y and Z coordinate axes, a processor (46), and a probe (50) for measuring a work piece (26), the method comprising the steps of:

    using said probe (50) to measure an observed dimension of said work piece (26) along one of said coordinate axes;
    storing said observed dimension in said processor (46);
    determining the thermal expansion of said machine tool (10) along said one of said coordinate axes;
    storing said machine tool thermal expansion in said processor (46);
    determining the thermal expansion of said work piece (26);
    storing said work piece thermal expansion in said processor (46); and
    determining an actual dimension of said work piece (26) from said observed dimension, said machine tool thermal expansion, and said work piece thermal expansion.

3. The method of claim 1 or claim 2 wherein said step of determining said machine tool thermal expansion includes measuring the temperature of said machine tool (10).

4. The method of claim 3 wherein said step of determining said machine tool thermal expansion includes determining the difference between said machine tool temperature and a standard reference temperature.

5. The method of claim 1 or claim 2 wherein said step of determining said work piece thermal expansion includes measuring the temperature of said work piece (26).

6. The method of claim 5 wherein measuring said work piece temperature includes flooding said work piece (26) with a coolant and measuring the temperature of said coolant.

7. The method of claim 5 wherein said step of determining said work piece thermal expansion includes determining the difference between said work piece temperature and a standard reference temperature.

8. The method of claim 2 wherein said machine tool (10) and said work piece (26) both have a coefficient of thermal expansion and further comprising the step of storing said machine tool coefficient of thermal expansion and said work piece coefficient of thermal expansion in said processor (46).

9. The method of claim 1 or claim 2 wherein said actual dimension is determined using the equation:

$$d_a = d_o - (E_w - E_m)$$

where $d_a$ is said actual dimension, $d_o$ is said observed dimension, $E_w$ is said work piece thermal expansion and $E_m$ is said machine tool thermal expansion.

10. A machine tool (10) comprising:

    a work table (24) for supporting a work piece (26);
    a probe (50) for measuring an observed dimension of said work piece (26);
    means (42) for sensing the temperature of said work piece (26);
    means (44) for sensing a temperature of said machine tool (10); and
    a processor (46) for controlling the position of said probe (50) relative to said work piece (26) and receiving input of said observed dimension, said work piece temperature and said machine tool temperature, said processor (46) determining an actual dimension of said work piece (26).

11. A machine tool (10) comprising:

    a base (18);
    a work table (24) for supporting a work piece (26), said work table (24) being slideably supported on said base (18);
    a column (12) slideably supported on said base (18);
    a tool holder (34) slideably supported on said column (12);
    a probe (50) mounted in said tool holder (34) for measuring an observed dimension of said work piece (26);
a measuring system (35) for tracking the position of said tool holder (34);
at least one temperature sensor (44) attached to said measuring system (35);
means (42) for sensing the temperature of said work piece (26); and
a processor (46) for controlling the position of said probe (50) relative to said work piece (26), said processor (46) being connected to said temperature sensor (44) and said means (46) for sensing the temperature of said work piece (26) so as to determine an actual dimension of said work piece (26).

12. The machine tool (10) of claim 10 or claim 11 further comprising means (36) for flooding said work piece (26) with a coolant and wherein said means (42) for sensing the temperature of said work piece (26) includes a temperature sensor (42) located in said coolant.

FIG. 1

FIG. 2

EP 1 128 156 A1

**European Patent Office**

**EUROPEAN SEARCH REPORT**

Application Number

EP 01 30 1059

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 36 20 118 A (ZEISS CARL FA) 17 December 1987 (1987-12-17) | 1-4,8,9 | G01B5/00 B23Q11/00 |
| Y | * the whole document * | 1-12 | |
| Y | EP 0 546 784 A (RENISHAW METROLOGY LTD) 16 June 1993 (1993-06-16) * column 1, line 6-41 - column 5, line 27-32 * | 1-12 | |
| Y | US 4 392 195 A (INOUE KIYOSHI) 5 July 1983 (1983-07-05) * claims 11,25-28 * | 1,2,10, 11 | |
| Y | PATENT ABSTRACTS OF JAPAN vol. 018, no. 203 (M-1590), 11 April 1994 (1994-04-11) & JP 06 008107 A (HITACHI SEIKO LTD), 18 January 1994 (1994-01-18) * abstract * | 1,2,10, 11 | |
| A | US 3 332 153 A (ERWIN G. LOEWEN) 25 July 1967 (1967-07-25) * column 2, line 31-64; figure 6 * | 1,2,10, 11 | TECHNICAL FIELDS SEARCHED (Int.Cl.7) G01B B23Q |

The present search report has been drawn up for all claims

| Place of search | Date of completion of the search | Examiner |
|---|---|---|
| MUNICH | 8 June 2001 | Westhues, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

8

## ANNEX TO THE EUROPEAN SEARCH REPORT
## ON EUROPEAN PATENT APPLICATION NO.

EP 01 30 1059

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2001

| Patent document cited in search report | | Publication date | Patent family member(s) | | Publication date |
|---|---|---|---|---|---|
| DE 3620118 | A | 17-12-1987 | NONE | | |
| EP 0546784 | A | 16-06-1993 | JP | 5248849 A | 28-09-1993 |
| US 4392195 | A | 05-07-1983 | JP | 1384613 C | 26-06-1987 |
| | | | JP | 56052132 A | 11-05-1981 |
| | | | JP | 61050744 B | 05-11-1986 |
| | | | DE | 3037553 A | 16-04-1981 |
| | | | FR | 2466312 A | 10-04-1981 |
| | | | GB | 2062294 A,B | 20-05-1981 |
| | | | HK | 53785 A | 19-07-1985 |
| | | | IT | 1128572 B | 28-05-1986 |
| | | | SG | 31585 G | 15-11-1985 |
| JP 06008107 | A | 18-01-1994 | NONE | | |
| US 3332153 | A | 25-07-1967 | NONE | | |

EPO FORM P0459

For more details about this annex : see Official Journal of the European Patent Office, No. 12/82